# EUROPEAN PATENT SPECIFICATION

(11) **EP 0 633 724 B1**
(45) Date of publication and mention of the grant of the patent: **03.03.1999**
(21) Application number: 93907966.1
(22) Date of filing: 01.04.1993
(51) Int. Cl.: A01N 63/00

(54) **METHOD TO CONTROL FUNGAL DISEASE**
VERFAHREN ZUR BEKÄMPFUNG VON PILZLICHEN ERKRANKUNGEN
METHODE POUR COMBATTRE LES MALADIES FONGIQUES

(30) Priority: 03.04.1992 GB 9207352
(43) Date of publication of application: 18.01.1995
(73) Proprietor: ZENECA LIMITED, London W1Y 6LN (GB); THE UNIVERSITY OF NOTTINGHAM, Nottingham NG7 2RD (GB)
(72) Inventor: CLARKSON, John Paul, Beeston, Nottingham NG9 2LG (GB); LUCAS, John Andrew, Attenborough, Nottingham NG9 6BQ (GB); RHODES, David John, Bracknell, Berkshire RG12 7NB (GB); ROSE, Stephanie Ann, Maidenhead, Berkshire SL6 7AL (GB)
(74) Representative: Huskisson, Frank Mackie
(86) International application number: GB9300678
(87) International publication number: WO9319602

(56) References cited:
- WO-A-91/05475
- WO-A-92/18613

## Description

This invention relates to a method of protecting crop plants from fungal attack by the use of antifungal micro-organisms. More specifically, the invention relates to a method of controlling Eyespot disease by the use of strains of Pseudomonas fluorescens.

Eyespot, caused by the fungus Pseudocercosporella herpotrichoides (Fron. Deighton), is a potentially damaging stembase disease of cereals, especially winter wheat. The pathogen survives on straw from the previous crop and sporulates during cool weather in winter and early spring (Fitt et al, 1988, Plant Pathology, 37, 311-328). Conidia are splash-dispersed by rainfall onto the stembases of the new crop. Germination is followed by germ-tube extension, formation of appressoria and penetration of the coleoptile (Daniels et al, 1991, Mycological Research, 95, 385-397). Subsequently runner hyphae are formed and sequential penetration of leaf sheaths occurs from differentiated mycelial plaques. Visual symptoms of the disease eventually develop with stembase browning and formation of characteristic "eye-shaped" lesions. The fungus exists as both W- and R-pathotypes.

Annual losses caused by Eyespot disease in the UK have been estimated at £20-30 million on average (Fitt et al, 1990, Annals of Applied Biology, 117, 473-486). Protecting crops from the disease therefore presents a significant problem.

Effective control of Eyespot was initially provided by MBC fungicides but resistance to these compounds, first reported in 1981, became widespread (King and Griffin, 1985, Plant Pathology, 34, 272-283). Chemical control of the fungus now relies to a large extent on the sterol biosynthesis inhibitor (SBI), prochloraz. Other SBI fungicides are less effective, especially against the R-pathotype (Bateman, 1990, Zeitschrift fur Pflanzenkrankheiten und Pflanzenschutz, 97, 508-516). Host genetic resistance to eyespot is available but has not been incorporated into currently recommended cultivars (Hollins et al, 1988, Plant Pathology, 37, 251-260).

As current methods of control are unsatisfactory, there has been an increased interest in developing integrated management strategies for control of the disease, including cultural methods (Fitt et al, 1990, Annals of Applied Biology, 117, 473-486), and biological control agents or biopesticides once suitable agents become available.

Both bacteria and fungi have been reported to suppress a number of soilborne and foliar diseases of cereals (Reinecke, 1981 in Blakeman (ed), Microbial Ecology of the Phylloplane, 383-395; Weller, 1988, Ann Rev Phytopath, 26, 379-407), but to date few studies have considered Pseudocercosporella herpotrichoides as a target. Reinecke and Fokkema (1981, Transaction of the British Mycological Society, 77, 343-350) described several methods for screening fungi for antagonism and reported that Microdochium bolleyi effectively reduced eyespot disease in pot trials. Antagonistic effects of the related non-pathogenic species Pseudocercosporella anguioides have also been reported in vitro, and in the field (Berndt and Fehrmann, 1988, Mitteilungen biolische Bundesanstalt Land und Forstwirtsschaft, Berlin Heft, 245, 167; Schreiber and Prillwitz, 1989, Zeitschrift fur Pflanzenkrankheiten und Pflansenschutz, 96, 408-427). However, the potential of bacterial antagonists for reducing eyespot has not been assessed.

We have previously isolated a number of Pseudomonas fluorescens strains which are known to be effective against fungal diseases, as described in our international patent application number PCT/GB90/01598 (published as WO91/05475) and in our international patent application number PCT/GB92/00597 (published as WO92/18613).

An object of the present invention is to provide an agriculturally useful method for controlling Eyespot.

According to the present invention there is provided a method of controlling Pseudocercosporella herpotrichoides comprising application of an effective antifungal dosage of one or more Pseudomonas fluorescens strains deposited at The National Collection of Industrial and Marine Bacteria under the accession numbers NCIB 40186, 40187, 40188, 40189 and 40190.

Pseudomonas fluorescens strain NCIB 40186 is particularly effective against Pseudocercosporella herpotrichoides. Control of this fungus enables control of Eyespot by prevention of the disease, reduction in disease severity or eradication of the disease.

Pseudomonas fluorescens strains NCIB 40186, 40187, 40188 and 40190 are antifungal agents described in our international patent application number PCT/GB90/01598 (published as WO91/05475). Pseudomonas fluorescens strain NCIB 40189 is an antifungal agent described in our international patent application number PCT/GB92/00597 (published as WO92/18613). The strains were deposited at The National Collections of Industrial and Marine Bacteria (23 St Machar Drive, Aberdeen, Scotland, AB2 1RY) under the terms of the Budapest Treaty on 1st September 1989, and have shown activity against various fungi and fungal diseases with an ability to inhibit fungal attack on plants. The present invention is based on the additional activity of these known strains against Eyespot, an important disease of cereals. The use of a single biological control agent may thus provide protection against more than one disease. The bacterial antagonists may be capable of interfering with fungal growth, germination of conidia or formation of infection structures.

Application of a Pseudomonas strain active against Pseudocercosporella herpotrichoides to the fungus, its growing medium (including infested stubble), its potential substrate, soil, plants (including any part of the plant such as the stem) or seeds will protect crop plants against infection and the disease Eyespot. Antifungal agricultural compositions containing one or more of the Pseudomonas strains as active ingredient in admixture with a carrier composition acceptable in agricultural practice can also be used. Examples of the types of agricultural formulations which may be employed are sprays, seed coatings compositions, liquid for root or soil drenching and granular or powder compositions. The base materials for these are well known in the art.

The present invention will now be described by way of example only.

### EXAMPLE 1

### In vitro testing of antifungal activity.

Agar plate experiments were used to test Pseudomonas fluorescens strain NCIB 40186 for its activity against Pseudocercosporella herpotrichoides. A commercial strain of Streptomyces griseoviridis (MYCO), commercially marketed as "Mycostop", was used as a comparison in the experiments (Lahdenpera et al, 1991 in: Beemster et al (eds), Biotic interactions and soil-borne diseases, 258-263). Like the Pseudomonas strains NCIB 40186-40190, this is a bacterial antagonist of proven biological control activity against a variety of fungal pathogens. Bacterial isolates were stored on nutrient agar slopes (Oxoid) at 4°C.

Pseudocercosporella herpotrichoides isolates were stored on sterile straw to maintain pathogenicity. Straw was plated on malt yeast glucose agar and incubated at 19°C; resulting colonies were subcultured only once. Spores were produced by macerating mycelium in sterile distilled water, transferring to tap water agar plates and incubating for 2-6 weeks at 4°C. Mycelial fragments were then removed by filtering through 0.25 mm nylon mesh and the resulting spore suspension washed twice by centrifugation in sterile distilled water at 1100 g for 20 minutes. An R-type P herpotrichoides strain (from the Nottingham University culture collection, code 22-12) of known pathogenicity and good sporulation ability was used.

Agar plates were spread with 0.05 ml P herpotrichoides conidia (1x10⁵/ml) and allowed to dry. Several media were used to represent different nutrient levels. Nutrient agar (NA) was included as a high nutrient medium; wheat straw (SA) and wheat seedling (WSA) agars were used to provide lower nutrient levels more typical of those experienced by the fungus in nature; tap water agar (TWA) was used as a nutrient poor medium. SA was made by steaming 30 g straw per litre tap water for 3 hours, straining through muslin, adding agar to the filtrate (20 g/l) and autoclaving for 20 minutes at 121°C. WSA was made as above using 100 g wheat seedlings per litre water.

Bacterial isolates were streaked on each plate, incubated at 19°C and observed after one week. Evidence of antagonism was observed as inhibition zones where spores had failed to germinate or subsequent growth was reduced. The mean width of the inhibition zone was measured in three replicates.

Results are shown in Table 1.

**TABLE 1**

| BACTERIAL ISOLATES SHOWING ANTAGONISM TOWARDS P HERPOTRICHOIDES | | | | |
|---|---|---|---|---|
| | MEDIUM | | | |
| | SA | WSA | NA | TWA |
| ISOLATE | | | | |
| NCIB 40186 | + (11) | + (9) | + | 0 |
| MYCO | + (9) | + (7) | + | + |

| | | | | |
|---|---|---|---|---|
| 0 = no inhibition zone | | | | |
| + = inhibition zone (mean width of zone in mm) | | | | |

Strain NCIB 40186 inhibits the fungus on SA, WSA and NA, and may be slightly more active than MYCO.

NCIB 40186 and MYCO were also tested on WSA against four W- and a further six R-pathotypes of Pseudocercosporella herpotrichoides . Inhibition zones were observed in all cases.

### EXAMPLE 2

### Effects on germination of P herpotrichoides conidia.

The bacteria were tested for their effect on germination of P herpotrichoides conidia in various media.

Bacteria were grown for 48 hours on nutrient agar slopes at 25°C. 5 ml of sterile distilled water was added to each slope and the colonies scraped with a sterile loop. The resulting suspension was then spun at 2000 g for 20 minutes. The supernatant was removed and the bacterial cells resuspended in 3 ml wheat seedling broth (WSB) or sterile distilled water (SDW). Effect on germination was also tested in cultures of bacterial cells grown in nutrient broth for 24 hours (CB+), and in culture broth with cells removed by a 0.2 µm millipore filter (CB-). The Pseudomonas fluorescens (NCIB 40186) culture broth was pH 8.2, the Streptomyces griseoviridis (MYCO) broth was pH 8.0 and the control medium was pH 7.3.

0.02 ml of each bacterial suspension was added with 0.02 ml of a P herpotrichoides conidial suspension in the appropriate medium (5x10⁴ spores/ml) on to 1 cm³ pieces of Melinex polyester film (Agar Scientific). 0.02 ml P herpotrichoides conidia with 0.02 ml of the appropriate medium was included as a control.

Melinex pieces were placed on glass slides and incubated at 19°C in petri dishes lined with damp tissue paper. After 48 hours the pieces were removed, stained in aniline blue in lactic acid (1 g/l) for 2 minutes and mounted in lactic acid. The conidia adhering to the Melinex were then assessed at x100 magnification for percent germination and length of the longest germ tube formed by each conidium.

Results are shown in Table 2. Percentage spore germination in wheat seedling broth (WSB), sterile distilled water (SDW), nutrient broth culture with cells (CB+) and nutrient broth culture without cells (CB-) is shown. The length of the longest germ tube as a percentage of the control is also shown. Results for strain NCIB 40186 and for WSB are means of two replicated experiments; the other results for MYCO are means from one replicated experiment.

**TABLE 2**

| EFFECTS ON GERMINATION OF P HERPOTRICHOIDES CONIDIA | | |
|---|---|---|
| | ISOLATE | |
| | NCIB 40186 | MYCO |
| % GERMINATION | | |
| WSB | 0 | 63 |
| SDW | 0 | 100 |
| CB+ | 0 | 0 |
| CB- | 36 | 100 |

| LENGTH AS % CONTROL | | |
|---|---|---|
| WSB | 0 | 11 |
| SDW | 0 | 56 |
| CB+ | 0 | 0 |
| CB- | 12 | 93 |

It can be seen that strain NCIB 40186 inhibited germination completely in WSB and in SDW. In nutrient broth, both the P fluorescens (NCIB 40186) and S griseoviridis (MYCO) isolates inhibited germination completely if cells were present (CB+). Removal of cells (CB-) reduced the efficacy of strain 40186 but abolished inhibition by S griseoviridis completely.

Inhibition of germination or subsequent germ tube growth is correlated with the activity shown on agar.

The activity of P fluorescens strain NCIB 40186 in distilled water may indicate production of an inhibitory secondary metabolite. The production of inhibitory metabolites by Pseudomonas fluorescens has been widely reported as an important factor in plant disease suppression (Leisinger & Margraff, 1979, Microbiological Reviews, 43, 422-442; Turhan and Grossman, 1986, J Phytopathology, 116, 238-243; Weller, 1988, Ann Rev Phytopathology, 26, 379-407). Mechanisms of antagonism might include antibiotics, siderophore activity, or lysis (Fravel, 1988, Ann Rev Phytopathology, 26, 75-91; Loper and Buyer, 1990, Molecular Plant-Microbe Interactions, 4, 5-13; Renwick et al, Plant Pathology, 40, 523-532).

### EXAMPLE 3

### Antifungal activity in vivo against Pseudocercosporella herpotrichoides Pathotype R.

The activity of Pseudomonas fluorescens strain NCIB 40186 against Pseudocercosporella herpotrichoides was tested using inoculation experiments on wheat plants.

Wheat seeds (cv. Avalon) were sown in compost in 9 cm pots (nine seeds per pot) and each pot covered with a layer of sand (0.5 cm depth). After emergence, seedlings were thinned to seven per pot. Plants were raised in a growth cabinet (60-100 µmol m⁻² s⁻¹, 19°C +/- 1 °C, 16 hour day).

After 2 weeks, plants were inoculated with 0.5 ml P herpotrichoides conidia in nutrient broth or sterile distilled water (5x10⁴/ml) by pipetting into plastic collars (3 cm long, 4 mm internal diameter) placed over each plant and enclosing the stembase according to the method of Daniels et al (1991, Mycological Research, 95, 385-397). Plastic bags were placed over each pot for 48 hours to maintain high humidity.

Bacteria were stored in nutrient broth number 2 (Oxoid) with 20% glycerol at -20°C. Isolates were grown in nutrient broth for 24 hours at 25°C and 150 rpm, and used to produce the following treatments for application to the plants:
CB+ (bacterial cells in the culture broth, approx 10⁹ cells/ml);
SDW (bacterial cells resuspended in sterile distilled water after centrifugation at 2000 g for 1 hour, approx 10⁹ cells/ml);
CB- (culture broth without bacterial cells after centrifugation at 2000 g for 1 hour).
0.5 ml of these suspensions were pipetted into the collars at the times shown by an asterisk (*) in Table 3.

**TABLE 3**

| | DAYS BEFORE/AFTER P HERPOTRICHOIDES INOCULATION | | | | |
|---|---|---|---|---|---|
| | -1 | 0 | 7 | 14 | 21 |
| Expt 1 (CB+) | | * | * | * | * |
| Expt 2 (CB+, SDW) | * | * | * | * | * |
| Expt 3 (CB-) | * | * | * | * | * |
| Expt 4 (CB+, SDW) | * | * | * | | |

An application in nutrient broth (NB) was used as the control.

For Experiments 1-3, disease was scored using a modified scheme of Scott (1971, Annals of Applied Biology, 68, 169-175) by counting the number of leaf sheaths penetrated by the fungus on observation of stembase browning. As penetration can occur several leaf sheaths ahead of visible browning, a low power binocular microscope was used to observe pigmented infection plaques on the surface of each leaf sheath. This procedure also precluded any possible confusion with stembase browning caused by other fungi such as Rhizoctonia and Fusarium.

Results for Experiments 1-3 are shown in Tables 4-6 respectively. Values followed by the same letter do not differ significantly at P=0.001 according to Duncan's multiple range test.

**TABLE 4**

| EXPERIMENT 1: EFFECT OF BACTERIA ON EYESPOT INFECTION OF WHEAT | | |
|---|---|---|
| TREATMENT | DISEASE | SCORE |
| Control (NB) | 8.5 | a |
| NCIB 40186 (CB+) | 1.5 | b |
| MYCO (CB+) | 1.9 | b |

**TABLE 5**

| EXPERIMENT 2: EFFECT OF BACTERIA ON EYESPOT INFECTION OF WHEAT | | |
|---|---|---|
| TREATMENT | DISEASE | SCORE |
| Control (NB) | 10.8 | a |
| Control (SDW) | 10.5 | a |
| NCIB 40186 (CB+) | 2.6 | b |
| NCIB 40186 (SDW) | 9.9 | a |
| MYCO (CB+) | 2.6 | b |
| MYCO (SDW) | 8.0 | c |

**TABLE 6**

| EXPERIMENT 3: EFFECT OF BACTERIA ON EYESPOT INFECTION OF WHEAT | | |
|---|---|---|
| TREATMENT | DISEASE | SCORE |
| Control (NB) | 11.3 | a |
| Control (SDW) | 11.1 | a |
| NCIB 40186 (CB-) | 10.3 | a |
| MYCO (CB-) | 9.9 | a |

Strain NCIB 40186 significantly reduced disease levels when applied in the culture broth (CB+). It did not have a significant effect when cells in distilled water or culture broth without cells were applied to the plants.

For Experiment 4, the number of infection plaques on each leaf sheath was determined quantitatively by fixing material in glutaraldehyde in phosphate buffer (30 g/l), staining with aniline blue in lactic acid (1 g/l) and observing under the microscope at x100. This assessment is subject to substantial variation between individual plants and leaf sheaths, but major effects can nevertheless be detected. A non-parametric test was applied to the data whereby the number of plaques on the third leaf sheath for each treatment was assigned to one of two groups for each plant assessed (those with up to 10 or those with more than 10 plaques per leaf sheath). This allowed for occasional misclassification of ramified mycelium or other fungal "debris" as plaques.

Results for Experiment 4 are shown in Table 7. Frequency of plaque formation is the number of plants out of a total of 35 with plaque numbers falling into categories 0-10 and over 10 plaques on the third leaf sheath.

**TABLE 7**

| EFFECT OF BACTERIA ON FREQUENCY OF INFECTION PLAQUES FORMED ON THE THIRD LEAF SHEATH | | | |
|---|---|---|---|
| TREATMENT | FREQUENCY OF PLAQUE FORMATION | | GROUP |
| | 0-10 plaques | >10 plaques | |
| Control (NB) | 7 | 28 | A |
| Control (SDW) | 12 | 22 | A |
| NCIB 40186 (CB+) | 34 | 1 | B |
| NCIB 40186 (SDW) | 8 | 27 | A |
| MYCO (CB+) | 34 | 1 | B |
| MYCO (SDW) | 32 | 3 | B |

Treatments which suppressed lesions in Experiments 1 and 2 (Group B in Table 8) clearly differ from those which did not suppress lesions (Group A in Table 8) in the proportion of plants with high numbers of plaques.

P fluorescens strain NCIB 40186 was effective against P herpotrichoides in plant tests when applied as a culture broth (CB+), but had little effect when applied in sterile distilled water (SDW) even though it prevented germination in SDW in vitro.

It is clearly seen that Pseudomonas fluorescens strain NCIB 40186 reduced Eyespot disease severity in pot trials with wheat plants inoculated with an R-pathotype of Pseudocercosporella herpotrichoides, which correlates generally with activity in vitro. A corresponding reduction in the number of infection structures formed by the pathogen on leaf sheaths was observed following treatment with this isolate.

### EXAMPLE 4

### Antifungal activity in vivo against Pseudocercosporella herpotrichoides Pathotype W.

Winter wheat (Triticum aestivum L.) cv. Beaver was used in Experiment 1; cv. Hornet was used in Experiments 2 and 3. Seeds were planted at the rate of 10-12 per 3" pot, and seedlings grown to Zadok's GS11. Plants were selected for uniformity and vigour.

The pathogen, Pseudocercosporella herpotrichoides Pathotype W strain K1367 (carbendazim resistant) was routinely maintained on potato dextrose agar at 19°C under ultra-violet light. The plates were inoculated with a spore suspension prepared from stock cultures and were used after 7-10 days, after which the contents of each plate were scraped into 5 ml deionised water which was then adjusted to a concentration of 1 X 10⁷ conidia/ml.

The biological control agent, Pseudomonas fluorescens strain NCIB 40186, was grown in tryptic soya broth for 48 hours at 20°C, after which the suspension contained approximately 5 X 10⁹ colony-forming units (cfu)/ml.

In Experiments 1 and 2, the fungal spore suspension was mixed 1:9 v/v either with deionised water or with culture broth of NCIB 40186, and sprayed on to stem bases at the rate of 10 ml/pot using a Devilbliss MP atomiser at 7psi. Plants were placed in a growth cabinet at high humidity for 24 hours (15°C, 100% RH), removed and the stem bases surrounded by a layer of damp vermiculite. They were then maintained at 21°C (day), 17°C (night). After two weeks, the plants were potted up with 5" pots to allow further growth and maintained under the same conditions until assessment.

In Experiment 3, the inoculum was applied by soaking 1 cm² pads of absorbent matting. Three pads were placed around the stem bases, two plants per pot. The stem bases were then surrounded by a layer of moist vermiculite. The pots were placed inside sealed transparent boxes. The plants were maintained at a temperature of 15°C (day) and 10°C (night).

Disease severity was assessed after approx 11 weeks (Experiments 1 and 2) and 5 weeks (Experiment 3) after inoculation. In Experiment 1, disease severity was determined by the proportion of plants exhibiting lesions. In Experiments 2 and 3, the following severity index was used:

### GRADE

- 0 -: Uninfected,
- 1 -: No clearly defined lesions but disease is present
- 2 -: Slight infection; one or more small lesions occur but the total is less than half the circumference of the stem,
- 3 -: Moderate infection; one or more lesions almost or totally encircling the stem,
- 4 -: Severe infection; the stem is completely girdled by lesions and tissue is decayed, allowing lodging to occur.

Results for Experiments 1, 2 and 3 are shown in Tables 8, 9 and 10 respectively. In Experiment 2, each treatment was replicated twice. In Experiment 3, each treatement was replicated four times.

**TABLE 8**

| RESULTS OF EXPERIMENT 1 | | | |
|---|---|---|---|
| TREATMENT | NO. PLANTS INFECTED | NO. PLANTS ASSESSED | % INFECTION |
| No pathogen | 0 | 12 | 0 |
| Pathogen alone | 26 | 52 | 50 |
| Pathogen plus NCIB 40186 | 3 | 12 | 25 |

**TABLE 9**

| RESULTS OF EXPERIMENT 2 | |
|---|---|
| TREATMENT | DISEASE SEVERITY |
| No pathogen | 0 |
| Pathogen alone | 2.095 +/- 0.75 |
| Pathogen plus NCIB 40186 | 1.144 +/- 0.19 |

**TABLE 10**

| RESULTS OF EXPERIMENT 3 | |
|---|---|
| TREATMENT | DISEASE SEVERITY |
| No pathogen | 0 |
| Pathogen alone | 2.5 +/- 0.80 |
| Pathogen plus NCIB 40186 | 0.4 +/- 0.67 |

## Claims

1. A method of controlling Pseudocercosporella herpotrichoides comprising application of an effective antifungal dosage of one or more Pseudomonas fluorescens strains deposited at The National Collection of Industrial and Marine Bacteria under the accession numbers NCIB 40186, 40187, 40188, 40189 and 40190.

2. A method as claimed in claim 1 comprising application of Pseudomonas fluorescens strain NCIB 40186.

3. A method as claimed in claim 1 or claim 2 for inhibiting fungal attack on a plant comprising application of the antifungal dosage to the locus of the plant or to the locus of a seed from which the plant will grow.

4. A method as claimed in claim 3 in which the antifungal dosage is applied to the plant.

5. A method as claimed in claim 4 in which the antifungal dosage is applied to the plant stem.

6. A method as claimed in claim 3 in which the antifungal dosage is applied to the seed prior to sowing.

7. A method as claimed in claim 3 in which the antifungal dosage is applied to a growing medium in which the plant is growing or is to he grown.

8. An antifungal agricultural composition for use in a method as claimed in claim 1 comprising as active ingredient one or more Pseudomonas fluorescens strains deposited at The National Collection of Industrial and Marine Bacteria under the accession numbers NCIB 40186, 40187, 40188, 40189 and 40190, in admixture with a carrier composition acceptable in agricultural practice.

9. A composition as claimed in claim 8 which is applied as a spray.

10. A composition as claimed in claim 8 which is applied as a seed coating.

11. A composition as claimed in claim 8 which is applied as a liquid drench.

12. A composition as claimed in claim 8 which is applied as a granular composition.

13. A composition as claimed in claim 8 which is applied as a powder.

14. Use of one or more Pseudomonas fluorescens strains deposited at The National Collection of Industrial and Marine Bacteria under the accession numbers NCIB 40186, 40187, 40188, 40189 and 40190 for controlling Pseudocercosporella herpotrichoides.

## Patentansprüche

1. Verfahren zur Bekämpfung von Pseudocercosporella herpotrichoides, umfassend die Anwendung einer wirksamen antifungalen Dosis eines oder mehrerer Stämme von Pseudomonas fluorescens, hinterlegt bei "The National Collection of Industrial and Marine Bacteria" unter den Eingangsnummern NCIB 40186, 40187, 40188, 40189 und 40190.

2. Verfahren gemäß Anspruch 1, umfassend die Anwendung von Pseudomonas fluorescens, Stamm NCIB 40186.

3. Verfahren gemäß Anspruch 1 oder 2 zur Inhibierung von Pilzbefall auf einer Pflanze, umfassend die Anwendung der antifungalen Dosis auf den Ort der Pflanzen oder den Ort eines Samens, aus dem die Pflanze wachsen wird.

4. Verfahren gemäß Anspruch 3, worin die antifungale Dosis auf die Pflanze aufgebracht wird.

5. Verfahren gemäß Anspruch 4, worin die antifungale Dosis auf den Pflanzenhalm aufgebracht wird.

6. Verfahren gemäß Anspruch 3, worin die antifungale Dosis auf den Samen vor dem Aussäen aufgebracht wird.

7. Verfahren gemäß Anspruch 3, worin die antifungale Dosis auf ein Wachstumsmedium aufgebracht wird, in dem die Pflanze wächst oder angebaut werden soll.

8. Antifungale Agrozusammensetzung zur Verwendung in einem Verfahren gemäß Anspruch 1, umfassend als Wirkstoff einen oder mehrere Stämme von Pseudomonas fluorescens, die bei "The National Collection of Industrial and Marine Bacteria" unter den Eingangsnummern NCIB 40186, 40187, 40188, 40189 und 40190 hinterlegt sind, im Gemisch mit einer in der landwirtschaftlichen Praxis akzeptablen Trägerzusammensetzung.

9. Zusammensetzung gemäß Anspruch 8, die als Spray angewendet wird.

10. Zusammensetzung gemäß Anspruch 8, die als Saatbeschichtung angewendet wird.

11. Zusammensetzung gemäß Anspruch 8, die als flüssiger Einweicher angewendet wird.

12. Zusammensetzung gemäß Anspruch 8, die als granulare Zusammensetzung angewendet wird.

13. Zusammensetzung gemäß Anspruch 8, die als Pulver angewendet wird.

14. Verwendung eines oder mehrerer Stämme von Pseudomonas fluorescens, die bei "The National Collection of Industrial and Marine Bacteria" unter den Eingangsnummern NCIB 40186, 40187, 40188, 40189 und 40190 hinterlegt sind, zur Bekämpfung von Pseudocercosporella herpotrichoides.

## Revendications

1. Procédé pour combattre le Pseudocercosporella herpotrichoides comprenant l'application d'une dose antifongique efficace d'une ou de plusieurs souches de Pseudomonas fluorescens déposées à la 〈〈 The National Collection of Industrial and Marine Bacteria 〉〉 sous les numéros d'accès NCIB 40186, 40187, 40188, 40189 et 40190.

2. Procédé selon la revendication 1, comprenant l'application de la souche de Pseudomonas fluorescens NCIB 40186.

3. Procédé selon la revendication 1 ou la revendication 2, d'inhibition de l'attaque fongique sur une plante comprenant l'application de la dose antifongique sur le locus de la plante ou sur le locus d'une graine à partir de laquelle poussera la plante.

4. Procédé selon la revendication 3 dans lequel la dose antifongique est appliquée à la plante.

5. Procédé selon la revendication 4, dans lequel la dose est appliquée sur la tige de la plante.

6. Procédé selon la revendication 3, dans lequel la dose antifongique est appliquée sur la graine avant l'ensemencement.

7. Procédé selon la revendication 3, dans lequel la dose antifongique est appliquée à un milieu de croissance dans lequel la plante est en train de pousser ou est destinée à pousser.

8. Composition antifongique agricole destinée à l'utilisation dans un procédé selon la revendication 1, comprenant en tant qu'ingrédients actifs une ou plusieurs souches de Pseudomonas fluorescens déposées à la 〈〈 The National Collection of Industrial and Marine Bacteria 〉〉 sous les numéros d'accès NCIB 40186, 40187, 40188, 40189 et 40190, en mélange avec une composition véhiculaire acceptable en pratique agricole.

9. Composition selon la revendication 8, qui est appliquée sous la forme d'un spray.

10. Composition selon la revendication 8, qui est appliquée sous la forme d'un revêtement sur la graine.

11. Composition selon la revendication 8, qui est appliquée sous la forme d'un mélange liquide.

12. Composition selon la revendication 8, qui est appliquée sous la forme d'une composition granulaire.

13. Composition selon la revendication 8, qui est appliquée sous la forme d'une poudre.

14. Utilisation d'une ou de plusieurs souches de Pseudomonas fluorescens déposée à là 〈〈 The National Collection of Industrial and Marine Bacteria 〉〉 sous les numéros d'accès NCIB 40186, 40187, 40188, 40189 et 40190, en vue de combattre le Pseudocercosporella herpotrichoides.
